# EUROPÄISCHE PATENTANMELDUNG

(11) **EP 4 329 243 A1**
(43) Veröffentlichungstag der Anmeldung: **28.02.2024**
(21) Anmeldenummer: 22192170.3
(22) Anmeldetag: 25.08.2022
(51) Int. Cl.: H04L 9/40, G06F 21/55, G06F 21/62

(54) **COMPUTERIMPLEMENTIERTES VERFAHREN ZUM AUTOMATISIERTEN ABSICHERN EINES RECHNERSYSTEMS**

(71) Anmelder: DGC Switzerland AG, 8002 Zürich (CH)
(72) Erfinder: Nehls, Matthias, 8002 Zürich (CH)
(74) Vertreter: Reich, Jochen

(57) **Zusammenfassung**

Die vorgeschlagene Erfindung betrifft einen computerimplementiertes Verfahren, welches es ermöglicht, dass Angriffsszenarien auf Computersysteme analysiert werden und hierbei Charakteristika des jeweiligen Unternehmens anhand von bereitgestellten Daten wie zum Beispiel Webseiten berücksichtigt werden. So ähneln sich die Angriffe typischerweise innerhalb einer Branche. Bei Kreditinstituten werden typischerweise Transaktionen manipuliert während bei Auskunftssystemen Denial of Service Attacken typisch sind. Erfindungsgemäß ist es also möglich, eine Angriffshistorie mit korrelierten Daten zu analysieren, wobei die bereitgestellten Daten eine Information über den Betreiber des Rechnersystems bieten. Sodann lassen sich ähnliche Angriffe voraussagen und proaktiv können Sicherungssteuerbefehle gestartet werden, die den Angriff verhindern beziehungsweise dessen Folgen abmildern. Die Erfindung ist auch gerichtet auf eine entsprechend eingerichtete Systemanordnung sowie auf ein Computerprogrammprodukt mit Steuerbefehlen, welche das Verfahren ausführen beziehungsweise die Systemanordnung betreiben. Darüber hinaus wird ein computerlesbares Medium mit den Steuerbefehlen vorgeschlagen.

## Beschreibung

Die vorgeschlagene Erfindung betrifft einen computerimplementiertes Verfahren, welches es ermöglicht, dass Angriffsszenarien auf Computersysteme analysiert werden und hierbei Charakteristika des jeweiligen Unternehmens anhand von bereitgestellten Daten wie zum Beispiel Webseiten berücksichtigt werden. So ähneln sich die Angriffe typischerweise innerhalb einer Branche. Bei Kreditinstituten werden typischerweise Transaktionen manipuliert während bei Auskunftssystemen Denial of Service Attacken typisch sind. Erfindungsgemäß ist es also möglich, eine Angriffshistorie mit korrelierten Daten zu analysieren, wobei die bereitgestellten Daten eine Information über den Betreiber des Rechnersystems bieten. Sodann lassen sich ähnliche Angriffe voraussagen und proaktiv können Sicherungssteuerbefehle gestartet werden, die den Angriff verhindern beziehungsweise dessen Folgen abmildern. Die Erfindung ist auch gerichtet auf eine entsprechend eingerichtete Systemanordnung sowie auf ein Computerprogrammprodukt mit Steuerbefehlen, welche das Verfahren ausführen beziehungsweise die Systemanordnung betreiben. Darüber hinaus wird ein computerlesbares Medium mit den Steuerbefehlen vorgeschlagen.

Aus dem Stand der Technik sind unterschiedliche Angriffe auf Computersysteme bekannt. Hierbei versuchen unberechtigte Zugriff auf ein Computersystem derart zu erlangen, dass diese entweder unberechtigt Daten auslesen oder aber auch unberechtigte Daten in das Computersystem einschreiben. Darüber hinaus gibt es Angriffe, welche Systemparameter stören wie zum Beispiel die Antwortzeiten. So ist es aus dem Stand der Technik bekannt, einen sogenannten Denial of Service DOS-Angriff zu starten. Hierbei starten unterschiedliche Akteure diverse Anfragen deren Anzahl derart hoch ist, dass das angegriffene Computersystem die Anfragen nicht mehr bewältigen kann. Hierunter leiden auch gutwillige Benutzer, die ebenso nicht mehr bedient werden können.

Bekannt sind unterschiedliche Angriffe, welche üblicherweise branchenspezifisch sind. So ist es zum Beispiel in einer ersten Branche für Angreifer besonders interessant Daten auszulesen. In einer zweiten Branche hingegen ist das Auslesen von Daten weniger angestrebt, sondern vielmehr sollen in das System Daten geschrieben werden. Wieder in einer anderen Branche hat der Angreifer keinerlei Interesse an den Daten und will diese nur für den rechtmäßigen Benutzer sperren, solange dieser zur Freischaltung der Daten eine bestimmte Forderung erfüllt. In wiederum anderen Branchen ist es möglich, dass schädliche Steuerbefehle in das Computernetzwerk eingebracht werden sollen, welche die Funktionalität insgesamt beeinträchtigen.

Die unterschiedlichen Kategorien von Angriffen sind also oftmals unternehmensspezifisch beziehungsweise ändern sich von Branche zu Branche.

Es besteht also ein Bedarf ein Verfahren zu schaffen, welches nicht generisch mit viel Aufwand allgemein die Sicherheit erhöht, sondern vielmehr lässt sich bereits gezielt Information vor einem Angriff verwerten, die darauf abstellt, dass Unternehmen zu beschreiben, welche ein Rechensystem betreibt. Eine gezielte Verteidigung würde schneller und mit weniger technischem Aufwand erfolgen. Es besteht also ein Bedarf ein Verfahren zu schaffen, welches proaktiv vor einem Angriff das Computernetzwerk beziehungsweise das Zielsystem branchenspezifisch absichert.

Es ist daher eine Aufgabe der vorliegenden Erfindung ein Verfahren bereitzustellen, welches eine kontextspezifische Bedrohungsanalyse durchführt und sodann zielgenau ein Computersystem vor einem Angriff schützt. Ferner ist es eine Aufgabe der vorliegenden Erfindung eine entsprechend eingerichtete Systemanordnung bereitzustellen beziehungsweise Steuerbefehle, welche das Verfahren ausführen beziehungsweise die Systemanordnung betreiben. Ferner soll ein computerlesbares Medium mit den Steuerbefehlen vorgeschlagen werden.

Die Aufgabe wird gelöst mit den Merkmalen des Patentanspruchs 1. Weitere vorteilhafte Ausgestaltungen sind in den Unteransprüchen angegeben.

Demgemäß wird ein computerimplementiertes Verfahren zum automatisierten Absichern eines Rechnersystems anhand einer Angriffshistorie vorgeschlagen, aufweisend ein Protokollieren eines Parameterverlaufs bei einem Ausführen vorbestimmter Steuerbefehle auf einem ersten Rechnersystem; ein Analysieren des protokollierten Parameterverlaufs zur Identifikation von Sicherheitslücken des ersten Rechnersystems; ein Bestimmen von Merkmalen von ersten ausgelesenen Datensegmenten, welche sich auf das erste Rechnersystem beziehen; ein Bestimmen von Merkmalen von zweiten ausgelesenen Datensegmenten, welche sich auf ein zweites Rechnersystem beziehen; ein Berechnen einer Ähnlichkeit der Merkmale der ersten Datensegmente und der zweiten Datensegmente; und ein Ausführen von Sicherungssteuerbefehlen auf dem zweiten Rechnersystem, welche den identifizierten Sicherheitslücken zugeordnet sind falls eine vordefinierte Ähnlichkeit überschritten wird.

Das vorgeschlagene Verfahren läuft automatisiert ab, da bei der Analyse des Bedrohungspotenzials keinerlei menschliches Zutun notwendig ist. Unter Berücksichtigung einer Angriffshistorie wird ein Bedrohungsprofil erstellt und sodann auf weitere potentielle Zielsysteme angewendet. Bei einem Rechnersystem handelt es sich generell um mindestens einen Computer, beziehungsweise um mehrere Systemkomponenten. Bei einem Rechnersystem kann es sich auch um mehrere Rechner handeln, welche netzwerktechnisch verbunden sind. Beispielsweise werden alle Rechner einer bestimmten Filiale beziehungsweise eines Unternehmens angegriffen.

Als eine Sicherheitslücke kann generell eine Beeinträchtigung in einem Zielsystem bzw. generell einem Rechnersystem verstanden werden. Hierzu muss nicht nur die Sicherheit an sich gefährdet sein, sondern vielmehr kann auch die Qualität eines Dienstes nachteilig beeinflusst werden. So kann eine Sicherheitslücke allgemein als eine Schwachstelle bezeichnet werden. Beispielsweise führt eine Denial of Service Attacke zu einer reduzierten Antwortzeit bzw. Bandbreite, was insofern sicherheitskritisch ist, als dass vorgegebene Qualitätsparameter nicht mehr erfüllt werden können. Auch eine Anfälligkeit für einen solchen Eingriff kann als Sicherheitslücke verstanden werden, da das angegriffene Zielsystem letztendlich nicht mehr in der Lage sein kann die geforderte Funktionalität aufgrund der Serverüberlastung bereitzustellen.

Erfindungsgemäß erfolgt ein Protokollieren eines Parameterverlaufs bei einem Ausführen vorbestimmter Steuerbefehle auf einem ersten Rechnersystem. Dies dient dazu einen Angriff zu protokollieren. Hierbei ist es vorteilhaft, wenn vorab klar ist, was genau einen Angriff auszeichnet beziehungsweise welche Parameterverläufe hierbei typisch sind. Dies kann auch im Nachhinein erfolgen, wenn klar geworden ist, dass ein Angriff stattgefunden hat. Hierzu wird das Protokoll ausgelesen und der Parameterverlauf wird analysiert.

Bei dem Protokollieren des Parameterverlaufs können Parameterwerte mitgeschrieben werden und später vorgehalten werden. Hierbei kann auch erkannt werden, wenn bestimmte Parameter in einem System geändert werden. Wird beispielsweise eine Datenbank manipuliert, so wird mitprotokolliert, welche Werte sich innerhalb der Datenbank verändern. Dies kann im Nachhinein als ein Angriff gewertet werden und sodann kann der Parameterverlauf aus dem Protokoll zur weiteren Bedrohungspotenzialanalyse verwendet werden.

Daraufhin erfolgt ein Analysieren des protokollierten Parameterlaufs zur Identifikation von Sicherheitslücken des ersten Rechnersystems. Hierzu wird identifiziert, welche Parameter geschrieben wurden und wie es dazu kam. Wird beispielsweise eine Datenbank manipuliert, so wird der Quellcode untersucht, der zu der Manipulation geführt hat. Hierbei kann beispielsweise erkannt werden, dass unberechtigterweise Steuerbefehle in die Datenbank als Eingabebefehle übertragen wurden. Dies kann beispielsweise als ein code injection Angriff gewertet werden. Hierbei werden Steuerbefehle eingegeben, anstatt Parameter. Diese Steuerbefehle werden dann von dem System ausgeführt und manipulieren Daten beziehungsweise verschaffen dem Angreifer unberechtigterweise Zugriff um Daten auszulesen.

Das Analysieren kann auch automatisiert erfolgen, wenn typische Angriffe bereits bekannt sind und entsprechende Muster in dem Parameterverlauf identifiziert werden. Darüber hinaus ist es möglich Trainingsdaten bereitzustellen, welche es erlauben einen Angriff in einem Parameterverlauf zu identifizieren.

Somit ist klar, wann ein Parameterverlauf eine Sicherheitslücke beschreibt. Führt beispielsweise ein bestimmter Parameterverlauf oder das Ausführen einer Funktionalität zu einem Überhitzen des Systems, so wurde eine Sicherheitslücke erkannt und der Parameterverlauf zurückverfolgt.

Erfindungsgemäß können Kriterien definiert werden, welche eine Sicherheitslücke beschreiben und sodann können diese Kriterien in dem Parameterverlauf gesucht werden. Finden sich Anhaltspunkte für eine Sicherheitslücke, so kann der entsprechende Angriff in den weiteren Verfahrensschritten berücksichtigt werden.

Da Angriffe typischerweise branchenspezifisch sind erfolgt ein Bestimmen von Merkmalen von ersten ausgelesenen Datensegmenten, welche sich auf das erste Rechnersystem beziehen. Bei den Datensegmenten kann es sich beispielsweise um eine Webseite handeln, welche dem Unternehmen zugeordnet ist, dass das Rechnersystem betreibt. Somit liegen also protokollierte Angriffe vor und es werden Datensegmente identifiziert, die auf das Angriffsziel Rückschlüsse zulassen. Bei den Datensegmenten kann es sich um jegliche Daten handeln, welche auf einen Betreiber des Rechnersystems schließen lassen. Neben Webseiten sind hier beispielsweise Unternehmensbroschüren oder andere Dokumentation denkbar.

Die Datensegmente werden dann analysiert, wobei bestimmte semantische Informationen extrahiert werden können. So kann die Merkmalsanalyse beziehungsweise das Bestimmen von Merkmalen der ausgelesenen Datensegmente darauf einen Rückschluss zulassen, dass es sich bei dem angegriffenen Rechnersystem um ein Computernetzwerk eines Kreditinstituts handelt. Auch können Datensegmente verwendet werden, welche auf dem ersten Rechnersystem selbst abgespeichert sind. Hierzu kann ein Bereich freigegeben werden und entsprechende Unternehmensunterlagen können analysiert werden. Somit hat man also textuelle Merkmale, welche sich auf das Rechnersystem beziehen beziehungsweise auf den Betreiber des Rechnersystems beziehen.

Nunmehr soll ein zweites Rechnersystem abgesichert werden und hierzu soll unternehmensspezifisch festgestellt werden, welche Angriffe typischerweise auf ein solches Unternehmen stattfinden. Hierzu erfolgt ein Bestimmen von Merkmalen von zweiten ausgelesenen Datensegmenten, welche sich auf ein zweites Rechnersystem beziehen. Bei dem zweiten Rechnersystem handelt es sich um das Angriffsziel. Hier kann beispielsweise implizit festgestellt werden, dass es sich auch bei dem zweiten Rechnersystem um ein Kreditinstitut handelt. Somit wird aufgrund der zweiten ausgelesenen Datensegmente darauf gefolgert, dass ein ähnlicher Angriff, das heißt ein ähnlicher Parameterverlauf, zu erwarten ist.

Damit ein Rückschluss auf den Betreiber des zweiten Rechnersystems gezogen werden kann, erfolgt ein Berechnen einer Ähnlichkeit der Merkmale der ersten Datensegmente und der zweiten Datensegmente. In dem geschilderten Beispiel handelt es sich um Kreditinstitute, welche typischerweise ähnliche Datensegmente bereitstellen. So wird in diesem Beispiel die jeweilige Webseite analysiert und einzelne Wörter treten besonders häufig bei beiden Betreibern in Erscheinung. So können beispielsweise die ersten und die zweiten Datensegmente die Wörter "Kredite" oder "Überweisung" besonders häufig hervortreten. Handelt es sich also bei dem Betreiber des zweiten Rechnersystems ebenfalls um ein Kreditinstitut, so wird das Berechnen der Ähnlichkeit derart ausfallen, dass eine hohe Übereinstimmung der ersten Datensegmente und der zweiten Datensegmente vorliegt.

Hierzu kann eine Textverarbeitung beziehungsweise eine Sprachverarbeitung zum Einsatz kommen. Diese semantischen Analysen schaffen dann Merkmale, welche den Text beziehungsweise die Datensegmente beschreiben. Bei großer Ähnlichkeit der Datensegmente, beziehungsweise der Webseiten oder Unternehmensbroschüren, wird auf die gleiche Branche geschlossen. Hieraus werden typische branchenspezifische Angriffe abgeleitet und entsprechende Sicherheitsvorkehrungen getroffen.

Dafür erfolgt ein Ausführen von Sicherungssteuerbefehle auf dem zweiten Rechnersystem, welche den identifizierten Sicherheitslücken zugeordnet sind falls eine vordefinierte Ähnlichkeit überschritten wird. Somit erfolgt also ein Absichern des Zielcomputersystems derart, dass Steuerbefehle ausgeführt werden, welche die Sicherheitslücke schließen.

Bei einer besonders hohen Ähnlichkeit wird von der gleichen Branche ausgegangen mit entsprechend gleichen Angriffen. Da für jede Sicherheitslücke typischerweise eine Gegenmaßnahme bekannt ist, wird diese Gegenmaßnahme beziehungsweise werden die Sicherungssteuerbefehle ausgeführt. Wird beispielsweise erkannt, dass in ein Computersystem besonders oft Schadsoftware eingebracht wird, so kann als Sicherungssteuerbefehle ein Update eingespielt werden. Dieses Update kann durch Sicherungssteuerbefehle beschrieben werden und ist der Sicherheitslücke des unberechtigten Eindringens zugeordnet. Somit ist für jede Sicherheitslücke bekannt, wie zu reagieren ist. Somit wird also branchenspezifisch anhand der Beschreibungen der Betreiber, also der ausgelesenen Datensegmente, ein Steuerbefehl beziehungsweise eine Mehrzahl von Steuerbefehlen ausgeführt.

Die vordefinierte Ähnlichkeit kann absolut oder relativ sein, derart, dass beispielsweise ein Prozentsatz einer Übereinstimmung angegeben wird, wobei der Prozentsatz empirisch ermittelt werden kann.

Gemäß einem Aspekt der vorliegenden Erfindung beschreibt der Parameterverlauf ein Auslesen und/ oder ein Schreiben von Systemparametern. Dies hat den Vorteil, dass anhand des Parameterverlaufs genau nachvollzogen werden kann, welche Daten unberechtigterweise ausgelesen werden beziehungsweise welche Daten unberechtigterweise geschrieben werden. Aufgrund des Lesens oder Schreibens kann dann ein Sicherheitsupdate oder generell ein Steuerbefehl ausgelöst werden. So kann bei einem Auslesen oder Schreiben der jeweilige Port vorab gesperrt werden.

Gemäß einem weiteren Aspekt der vorliegenden Erfindung wird eine Metrik bereitgestellt, welche Sicherheitslücken in Abhängigkeit eines Parameterverlaufs beschreibt. Dies hat den Vorteil, dass Sicherheitslücken automatisiert erkannt werden können und es wird ein Regelwerk bereitgestellt, welches angibt, dass ein bestimmter Parameterverlauf einem Angriff folgt. Werden beispielsweise der Reihe nach kritische Systemparameter unberechtigterweise geschrieben, so handelt es sich hierbei um eine Sicherheitslücke, die anhand eben dieses Parameterverlaufs identifiziert werden kann.

Gemäß einem weiteren Aspekt der vorliegenden Erfindung umfasst das Bestimmen von Merkmalen von ausgelesenen Datensegmenten ein statistisches Verfahren, eine Wortstammreduktion, ein Löschen von Stoppwörtern, eine linguistische Datenverarbeitung, eine Sprachverarbeitung, eine syntaktische Analyse, eine semantische Analyse, ein Betreiben eines neuronalen Netzwerks und/ oder eine Textverarbeitung. Dies hat den Vorteil, dass die bereitgestellten Datensegmente beziehungsweise Texte voll umfassend analysiert werden können und der Inhalt komplett aufbereitet werden kann. So kann der Inhalt semantisch erfasst werden und es können sogar Audiodateien verwertet werden. Diese können in Text umgewandelt werden und sodann können auch Datensegmente von unterschiedlichen Datentypen miteinander bezüglich ihrer Ähnlichkeit geprüft werden.

Gemäß einem weiteren Aspekt der vorliegenden Erfindung umfassen die Datensegmente Webseiten, Dokumente und/ oder Zugriffsparameter. Dies hat den Vorteil, dass die Betreiber der Rechnersysteme auf unterschiedliche Art und Weise beschrieben werden können und dies erfolgt besonders vorteilhaft dadurch, dass bereits bestehende Dokumente jeder Art Verwendung finden können. So ist es nicht notwendig weitere Daten bereitzustellen, sondern vielmehr werden bestehende Daten geschickt wieder verwendet.

Gemäß einem weiteren Aspekt der vorliegenden Erfindung umfasst das Berechnen einer Ähnlichkeit eine statistische Auswertung, einen zeitlichen Verlauf der Änderung der Datensegmente, eine relative Übereinstimmung, eine absolute Übereinstimmung und/ oder eine Klassifizierung. Dies hat den Vorteil, dass ausgewertet werden kann, welche Terminologie wie oft in den jeweiligen Datensegmenten verwendet wird, beziehungsweise wie sich die Datensegmente bezüglich ihres Inhalts über die Zeit verändern. Darüber hinaus kann mittels einer Klassifizierung auch ein branchenspezifischer Angriffstyp identifiziert werden.

Gemäß einem weiteren Aspekt vorliegenden Erfindung umfasst das Ausführen von Sicherheitssteuerbefehlen ein Sperren von Ports, ein Sperren eines Benutzers, ein Sperren einer Adresse, ein Einstellen eines vorbestimmten Parameterwerts, ein Deaktivieren und/ oder ein Ausführen von Steuerbefehlen. Dies hat den Vorteil, dass für jede Bedrohungskulisse ein geeigneter Gegenmechanismus vorhanden ist. So können beispielsweise angebotene Dienste eingeschränkt angeboten werden beziehungsweise ganz deaktiviert werden. Darüber hinaus ist es möglich bei einem gewissen Bedrohungspotenzial ein Update zu installieren beziehungsweise bestimmte Internetprotokolladressen zu sperren.

Gemäß einem weiteren Aspekt der vorliegenden Erfindung erfolgt das Zuordnen von Sicherungssteuerbefehlen an identifizierte Sicherheitslücken empirisch. Dies hat den Vorteil, dass in einem Testlauf identifiziert werden kann, welche Sicherheitslücke wie geschlossen werden kann. Somit sind Steuerbefehle bekannt, die die Sicherheitslücke beheben. Eine Sicherheitslücke liegt beispielsweise auch dann vor, wenn ein Dienst nur noch eingeschränkt angeboten werden kann. So kann ein Herabsetzen der Antwortzeiten eines Servers ebenfalls als Sicherheitslücke gelten, wobei eine große Anzahl von Anfragen die Serverlast erhöht. Da dieses gezielte Anfragen die Systemleistung beeinflusst wird auch dies generell als Sicherheitslücke definiert.

Gemäß einem weiteren Aspekt der vorliegenden Erfindung ist die vordefinierte Ähnlichkeit relativ und/ oder absolut. Dies hat den Vorteil, dass die ausgelesenen Datensegmente in Beziehung gesetzt werden können und beispielsweise bei einem absoluten Auftreten einer bestimmten Terminologie kann eine Ähnlichkeit angenommen werden. Darüber hinaus können Datensegmente auch unterschiedlich umfangreich sein und insofern kann ein Normalisieren des Datenumfangs dazu führen, dass die Datensegmente besser vergleichbar sind. So kann beispielsweise definiert werden, dass eine Ähnlichkeit dann vorliegt, wenn die Datensegmente jeweils zu einem bestimmten Prozentsatz ein gewisses Wort oder generell eine Terminologie aufweisen.

Gemäß einem weiteren Aspekt der vorliegenden Erfindung werden die ausgelesenen Datensegmente aus unterschiedlichen Datenquellen ausgelesen. Dies hat den Vorteil, dass unterschiedliche Medien verwendet werden können. So kann beispielsweise als erstes Datensegment ein Teil einer Webseite dienen und als zweites Datensegment kann eine Firmenbroschüre dienen. Somit ist es also möglich unterschiedliche Datenquellen auszuwerten und somit branchenspezifische Angriffe zu identifizieren.

Gemäß einem weiteren Aspekt der vorliegenden Erfindung erfolgt das Berechnen der Ähnlichkeit anhand von Teilähnlichkeiten, welche gewichtet addiert werden. Dies hat den Vorteil, dass mehrere Teilaspekte ausgewertet werden können und somit kann die Gewichtung beziehungsweise die Berechnung der Ähnlichkeit mehrstufig erfolgen. So kann jeder Sicherheitslücke ein bestimmter Wert zugeordnet werden und dieser kann wiederum gewichtet werden. Diese entstehenden Teilwerte werden sodann addiert und ergeben eine Gesamtpunktezahl, welche dann bezüglich der Gegenmaßnahme ausschlaggebend ist.

Gemäß einem weiteren Aspekt der vorliegenden Erfindung wird ein zeitlicher Verlauf von Ähnlichkeiten protokolliert und hierbei wird eine zukünftige Ähnlichkeit extrapoliert. Dies hat den Vorteil, dass auch inhaltliche Entwicklungen auf den Datensegmenten festgestellt werden können und sodann wird das branchenspezifische Geschäftsmodell derart analysiert, dass auch bei Änderungen zukünftige Bedrohungsszenarien identifiziert werden können.

Die Aufgabe wird auch gelöst durch eine Systemanordnung zum automatisierten Absichern eines Rechnersystems anhand einer Angriffshistorie, aufweisend eine Protokolleinheit eingerichtet zum Protokollieren eines Parameterverlaufs bei einem Ausführen vorbestimmter Steuerbefehle auf einem ersten Rechnersystem; eine Analyseeinheit eingerichtet zum Analysieren des protokollierten Parameterverlaufs zur Identifikation von Sicherheitslücken des ersten Rechnersystems; eine erste Bestimmungseinheit eingerichtet zum Bestimmen von Merkmalen von ersten ausgelesenen Datensegmenten, welche sich auf das erste Rechnersystem beziehen; eine zweite Bestimmungseinheit eingerichtet zum Bestimmen von Merkmalen von zweiten ausgelesenen Datensegmenten, welche sich auf ein zweites Rechnersystem beziehen; eine Berechnungseinheit eingerichtet zum Berechnen einer Ähnlichkeit der Merkmale der ersten Datensegmente und der zweiten Datensegmente; und eine Ausführungseinheit eingerichtet zum Ausführen von Sicherungssteuerbefehlen auf dem zweiten Rechnersystem, welche den identifizierten Sicherheitslücken zugeordnet sind falls eine vordefinierte Ähnlichkeit überschritten wird.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell beziehungsweise virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung beziehungsweise normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Ablaufdiagramm des vorgeschlagenen Verfahrens gemäß einem Aspekt der vorliegenden Erfindung; und
- Figur 2:: ein schematisches Blockschaltbild der vorgeschlagenen Systemanordnung zum automatisierten Absichern eines Rechensystems gemäß einem weiteren Aspekt der vorliegenden Erfindung.

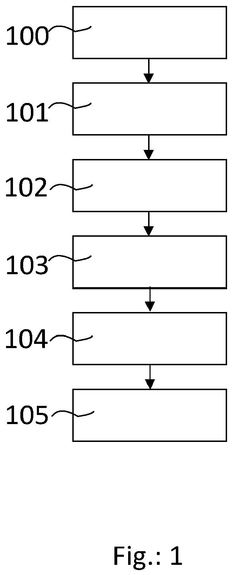

Figur 1 zeigt ein schematisches Blockschaltbild mit einem computerimplementierten Verfahren zum automatisierten Absichern eines Rechnersystems anhand einer Angriffshistorie, aufweisend ein Protokollieren 100 eines Parameterverlaufs bei einem Ausführen vorbestimmter Steuerbefehle auf einem ersten Rechnersystem; ein Analysieren 101 des protokollierten Parameterverlaufs zur Identifikation von Sicherheitslücken des ersten Rechnersystems; ein Bestimmen 102 von Merkmalen von ersten ausgelesenen Datensegmenten, welche sich auf das erste Rechnersystem beziehen; ein Bestimmen 103 von Merkmalen von zweiten ausgelesenen Datensegmenten, welche sich auf ein zweites Rechnersystem beziehen; ein Berechnen 104 einer Ähnlichkeit der Merkmale der ersten Datensegmente und der zweiten Datensegmente; und ein Ausführen 105 von Sicherungssteuerbefehlen auf dem zweiten Rechnersystem, welche den identifizierten Sicherheitslücken zugeordnet sind falls eine vordefinierte Ähnlichkeit überschritten wird.

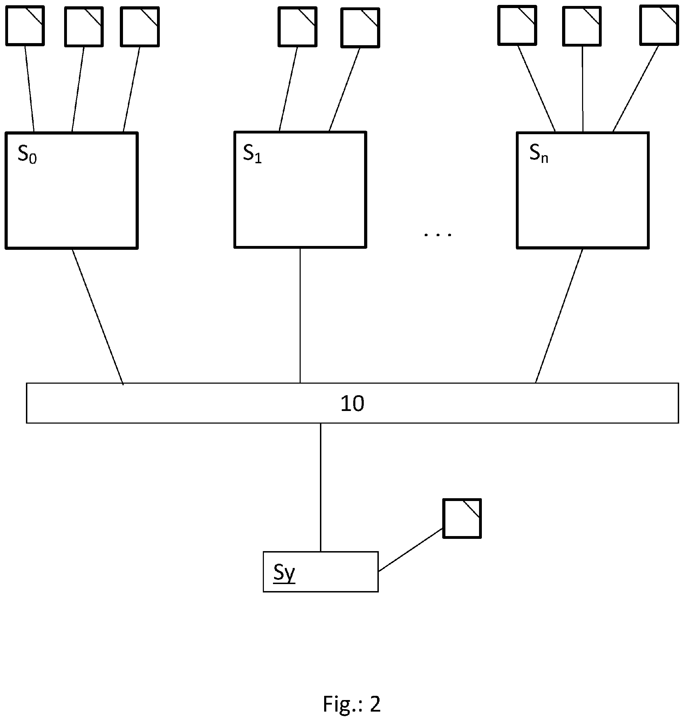

Figur 2 zeigt die erfindungsgemäß vorgeschlagene Systemanordnung, welche sich vorliegend in der Mitte mit Bezugszeichen 10 befindet. Die vorgeschlagene Systemanordnung 10 bekommt nunmehr von unterschiedlichen Systemen Datensegmente. So wird beispielsweise System S0 durch drei Datensegmente beschrieben. Das weitere Rechnersystem S1 wird durch zwei Datensegmente beschrieben. In dem vorhandenen Beispiel handelt es sich bei dem Rechnersystem S0 um eine Handelsplattform und bei dem Rechnersystem S1 handelt es sich um ein Kreditinstitut. Handelsplattformen und Kreditinstitute werden typischerweise auf unterschiedliche Arten angegriffen, so dass die Angriffe stark kontextsensitiv sind. Die vorgeschlagene Systemanordnung 10 empfängt nunmehr diese Datensegmente und kann auch Angriffshistorien auswerten. Wird beispielsweise das System S1 angegriffen, so werden entsprechende Parameterverläufe protokolliert und man kann entsprechende Sicherheitslücken identifizieren. Daraufhin erfolgt ein Auslesen der beiden Datensegmente, welche in der vorliegenden Figur 2 ganz oben dargestellt sind. Anhand dieser Datensegmente wird das Zielsystem S1 beschrieben. Somit weiß man also für zukünftige Angriffe, welche Spezifika in der Branche der Kreditinstitute zu erwarten sind.

Nunmehr ist ein zweites Rechnersystem Sy abzusichern. Das Zielsystem Sy ist vorliegend unten angeordnet und wird durch einen Datensegment beschrieben. Dies ist auf der rechten Seite angeordnet.

Somit liegt also das Zielsystem vor und man kann es semantisch anhand der Beschreibung dieses System klassifizieren. Aufgrund der Beschreibung, welche beispielsweise eine Webseite sein kann, wird nunmehr eine Ähnlichkeit zu den vorliegend oben dargestellten Zielsystemen berechnet. Da es sich bei dem ersten Zielsystem um eine Handelsplattform handelt, liegt hier nur eine geringe Ähnlichkeit vor. Da es sich jedoch bei dem zweiten Zielsystem S1 ebenfalls um ein Kreditinstitut handelt, genau wie Zielsystem Sy ist ein entsprechender Angriff zu erwarten. Hierzu wurden bereits vergangene Sicherheitslücken beziehungsweise Angriffe protokolliert und es kann entsprechend reagiert werden.

Somit wird ein Ausführen von Sicherungssteuerbefehlen durchgeführt und das System Sy wird in ähnlicher Weise abgesichert, wie ein Absichern auch das System S1 geschützt hätte.

Erfindungsgemäß ist es hier jedoch besonders vorteilhaft, dass das neue Zielsystem Sy bereits vor dem Eingriff abgesichert werden kann und dass dies kontextsensitiv beziehungsweise branchenspezifisch erfolgen kann. Somit können genau die notwendigen Sicherungssteuerbefehle ausgeführt werden obwohl der Angriff noch gar nicht stattgefunden hat. Es erfolgt also ein proaktives Absichern gegen einen Angriff, der noch nicht stattgefunden hat aber zu erwarten ist.

## Patentansprüche

1. Computerimplementiertes Verfahren zum automatisierten Absichern eines Rechnersystems anhand einer Angriffshistorie, aufweisend:
- ein Protokollieren (100) eines Parameterverlaufs bei einem Ausführen vorbestimmter Steuerbefehle auf einem ersten Rechnersystem;
- ein Analysieren (101) des protokollierten Parameterverlaufs zur Identifikation von Sicherheitslücken des ersten Rechnersystems;
- ein Bestimmen (102) von Merkmalen von ersten ausgelesenen Datensegmenten, welche sich auf das erste Rechnersystem beziehen;
- ein Bestimmen (103) von Merkmalen von zweiten ausgelesenen Datensegmenten, welche sich auf ein zweites Rechnersystem beziehen;
- ein Berechnen (104) einer Ähnlichkeit der Merkmale der ersten Datensegmente und der zweiten Datensegmente; und
- ein Ausführen (105) von Sicherungssteuerbefehlen auf dem zweiten Rechnersystem, welche den identifizierten Sicherheitslücken zugeordnet sind falls eine vordefinierte Ähnlichkeit überschritten wird.

2. Verfahren nach Anspruch 1, **dadurch gekennzeichnet, dass** der Parameterverlauf ein Auslesen und/ oder ein Schreiben von Systemparametern beschreibt.

3. Verfahren nach Anspruch 1 oder 2, **dadurch gekennzeichnet, dass** eine Metrik bereitgestellt wird, welche Sicherheitslücken in Abhängigkeit eines Parameterverlaufs beschreibt.

4. Verfahren nach einem der vorhergehenden Ansprüche, **dadurch gekennzeichnet, dass** das Bestimmen von Merkmalen von ausgelesenen Datensegmenten ein statistisches Verfahren, eine Wortstammreduktion, ein Löschen von Stoppwörtern, eine linguistische Datenverarbeitung, eine Spracherkennung, eine syntaktische Analyse, eine semantische Analyse, ein Betreiben eines neuronalen Netzwerks und/ oder eine Textverarbeitung umfasst.

5. Verfahren nach einem der vorhergehenden Ansprüche, **dadurch gekennzeichnet, dass** die Datensegmente Webseiten, Dokumente und/ oder Zugriffsparameter umfassen.

6. Verfahren nach einem der vorhergehenden Ansprüche, **dadurch gekennzeichnet, dass** das Berechnen (104) einer Ähnlichkeit eine statistische Auswertung, einen zeitlichen Verlauf der Änderung der Datensegmente, eine relative Übereinstimmung, eine absolute Übereinstimmung und/ oder eine Klassifizierung umfasst.

7. Verfahren nach einem der vorhergehenden Ansprüche, **dadurch gekennzeichnet, dass** das Ausführen (105) von Sicherungssteuerbefehlen ein Sperren von Ports, ein Sperren eines Benutzers, ein Sperren einer Adresse, ein Einstellen eines vorbestimmten Parameterwerts, ein Deaktivieren und/ oder ein Ausführen von Steuerbefehlen umfasst.

8. Verfahren nach einem der vorhergehenden Ansprüche, **dadurch gekennzeichnet, dass** das Zuordnen von Sicherungssteuerbefehlen an identifizierte Sicherheitslücken empirisch erfolgt.

9. Verfahren nach einem der vorhergehenden Ansprüche, **dadurch gekennzeichnet, dass** die vordefinierte Ähnlichkeit relativ und/ oder absolut ist.

10. Verfahren nach einem der vorhergehenden Ansprüche, **dadurch gekennzeichnet, dass** die ausgelesenen Datensegmente aus unterschiedlichen Datenquellen ausgelesen werden.

11. Verfahren nach einem der vorhergehenden Ansprüche, **dadurch gekennzeichnet, dass** das Berechnen (104) der Ähnlichkeit anhand von Teilähnlichkeiten erfolgt, welche gewichtet addiert werden.

12. Verfahren nach einem der vorhergehenden Ansprüche, **dadurch gekennzeichnet, dass** ein zeitlicher Verlauf von Ähnlichkeiten protokolliert wird und hierbei eine zukünftige Ähnlichkeit extrapoliert wird.

13. Systemanordnung (10) zum automatisierten Absichern eines Rechnersystems anhand einer Angriffshistorie, aufweisend:
- eine Protokolleinheit eingerichtet zum Protokollieren (100) eines Parameterverlaufs bei einem Ausführen vorbestimmter Steuerbefehle auf einem ersten Rechnersystem;
- eine Analyseeinheit eingerichtet zum Analysieren (101) des protokollierten Parameterverlaufs zur Identifikation von Sicherheitslücken des ersten Rechnersystems;
- eine erste Bestimmungseinheit eingerichtet zum Bestimmen (102) von Merkmalen von ersten ausgelesenen Datensegmenten, welche sich auf das erste Rechnersystem beziehen;
- eine zweite Bestimmungseinheit eingerichtet zum Bestimmen (103) von Merkmalen von zweiten ausgelesenen Datensegmenten, welche sich auf ein zweites Rechnersystem beziehen;
- eine Berechnungseinheit eingerichtet zum Berechnen (104) einer Ähnlichkeit der Merkmale der ersten Datensegmente und der zweiten Datensegmente; und
- eine Ausführungseinheit eingerichtet zum Ausführen (105) von Sicherungssteuerbefehlen auf dem zweiten Rechnersystem, welche den identifizierten Sicherheitslücken zugeordnet sind falls eine vordefinierte Ähnlichkeit überschritten wird.

14. Computerprogrammprodukt, umfassend Befehle, die bei der Ausführung des Programms durch mindestens einen Computer diesen veranlassen, die Schritte des Verfahrens nach einem der Ansprüche 1 bis 12 auszuführen.

15. Computerlesbares Speichermedium, umfassend Befehle, die bei der Ausführung durch mindestens einen Computer diesen veranlassen, die Schritte des Verfahrens nach einem der Ansprüche 1 bis 12 auszuführen.
